# EUROPEAN PATENT SPECIFICATION

(11) **EP 1 217 832 B1**
(45) Date of publication and mention of the grant of the patent: **23.06.2004**
(21) Application number: 02075459.4
(22) Date of filing: 25.02.1999
(51) Int. Cl.: H04N 5/445, H04N 7/16, H04N 7/173

(54) **Program guide system with monitoring of advertisement usage and user activities**
Programmführersystem mit Überwachung von Werbenutzung und Nutzeraktivitäten
Système guide d'émissions télévisées permettant de contrôler l'utilisation des annonces et les activités des utilisateurs

(30) Priority: 04.03.1998 US 34939; 15.05.1998 US 85607; 25.08.1998 US 139798
(43) Date of publication of application: 26.06.2002
(62) Divisional of application: 99938029.8
(73) Proprietor: United Video Properties Inc., Tulsa, Oklahoma 74136-5422 (US)
(72) Inventor: Thomas, William L., Bixby, Oklahoma 74008 (US); Hassel, Joel G., Arvada, Colorado 80005 (US); Knudson, Edward B., Littleton, Colorado 80127 (US); Marshall, Connie T., Muskogee, Oklahoma 74401 (US); Lemmons, Thomas R., Sand Springs, Oklahoma 74063 (US); Boyer, Franklin E., Tulsa Oklahoma 74136 (US); Kern, Donald C., Broken Arrow, Oklahoma 74011 (US); Ellis, Michael D., Boulder, Colorado 80304 (US)
(74) Representative: Hale, Peter

(56) References cited:
- WO-A-97/42763
- US-A- 5 559 548

## Description

### Background of the Invention

This invention relates to interactive television program guides, and more particularly, to techniques for monitoring advertising that is provided with interactive television program guides and for monitoring user activities such as user television viewing activities.

In some passive television program guides, such as the system shown in Davis et al. U.S. patent 5,559,548, video is provided on television channel that includes program listings and advertisements are displayed together.

Interactive television program guides allow television users to view television program listings on their televisions. Other functions that are provided by such program guides include the ability to display program listings in various formats, to perform genre-based searches for programs of interest, to support pay-per-view ordering, etc. Interactive television program guides may include systems such as the system shown in Hendricks et al. U.S. patent 5,600,364. Interactive program guides are typically implemented on microprocessor-based set-top boxes. Program listings data is transmitted to the set-top boxes from a centralized data distribution facility via the user's cable system headend. The program listings data is typically stored in memory in the set-top box, where it may be accessed by the interactive program guide.

Interactive program guides may be used to display advertisements, as described in Knudson et al. International patent application WO99/45702, Knudson et al. International patent application WO99/56466, Knudson et al. International patent application WO99/56473.

Program guide advertisements provide the user with useful information on various products and services. For example, program guide advertisements may be used to promote upcoming television programs. Program guide advertisements may also be used to promote non-programming products and services. For example, the user may be presented with an opportunity to purchase a product or service by selecting an interactive advertisement.

In order to determine the effectiveness of advertisements, it would be desirable to be able to monitor how often advertisements are displayed and selected by the user. It would also be desirable to be able to monitor which program guide screens the advertisements are displayed on and which program guide screens the user activates in general. Monitoring of user viewing activities and the user's use or non-program guide applications would also be desirable. Monitoring these types of information with a program guide would allow advertisements to be used most effectively. The information might also be used to provide program guide services that would otherwise not be possible.

In view of the foregoing, it is an object of the present invention to provide an interactive television program guide system in which advertisement usage and user activities are monitored by the guide.

The present invention is set out in the independent claims. Some optional features are set out in the claims dependent thereto.

The present invention provides a system in which an interactive television program guide is implemented on user television equipment, comprising:
means for providing an opportunity for a user to use non-program-guide applications on the user television equipment; and
means for collecting information with the interactive television program guide on which non-program guide applications are used.

According to the present invention, there is also provided a method for using a system in which an interactive television program guide is implemented on user television equipment, comprising the steps of:
providing an opportunity for a user to use non-program-guide applications on the user television equipment; and
collecting information with the interactive television program guide on which non-program guide applications are used.

### Brief Description of the Drawings

FIG. 1 is a diagram of an illustrative interactive television program guide system in which advertisement usage may be monitored.
FIG. 2 is a diagram illustrating how an advertisement for a program may be displayed as part of a program guide screen and how the user may be presented with various program guide options related to the advertised program when the user selects such an advertisement.
FIG. 3 is a diagram illustrating how an advertisement for a product or service may be displayed as part of a program guide screen and how the user may be presented with an opportunity to order the advertised product or service when the user selects such an advertisement.
FIG. 4 is a diagram showing some of the monitoring functions that may be provided by the interactive television program guide system in accordance with the present invention.
FIG. 5 is a diagram of an illustrative data structure showing various types of data that may be collected regarding advertisement usage.
FIG. 6 is a diagram of an illustrative data structure showing various types of data that may be collected regarding usage of different screens in the program guide.
FIG. 7 is a diagram of an illustrative data structure showing various types of data that may be collected regarding program viewing by the user.
FIG. 8 is a diagram of an illustrative data structure showing various types of data that may be collected regarding usage of non-program-guide applications by the user in accordance with the present invention.
FIG. 9 is a diagram showing steps involved in performing the data collection and analysis functions of the interactive program guide system in accordance with the present invention.
FIG. 10a is an illustrative program guide display screen containing real-time ratings information in accordance with the present invention.
FIG. 10b is an illustrative flow chart of steps involved in allowing a user to select a listing from the real-time ratings screen of FIG. 10a in accordance with the present invention.
FIG. 11 is a flow chart of illustrative steps involved in providing real-time ratings in accordance with the present invention.
FIG. 12 is a flow chart showing steps involved in gathering information for a number of separate user profiles and processing this information.
FIG. 13 is a flow chart of steps involved in filtering out less important data.
FIG. 14 is a diagram showing how data filters may be located at user television equipment or a data processing facility.
FIG. 15 is a diagram showing how a data filter may involve filtering out less important data based on specific advertisements or actions or may involve filtering out less important data based on viewer demographics.

### Detailed Description of the Preferred Embodiments

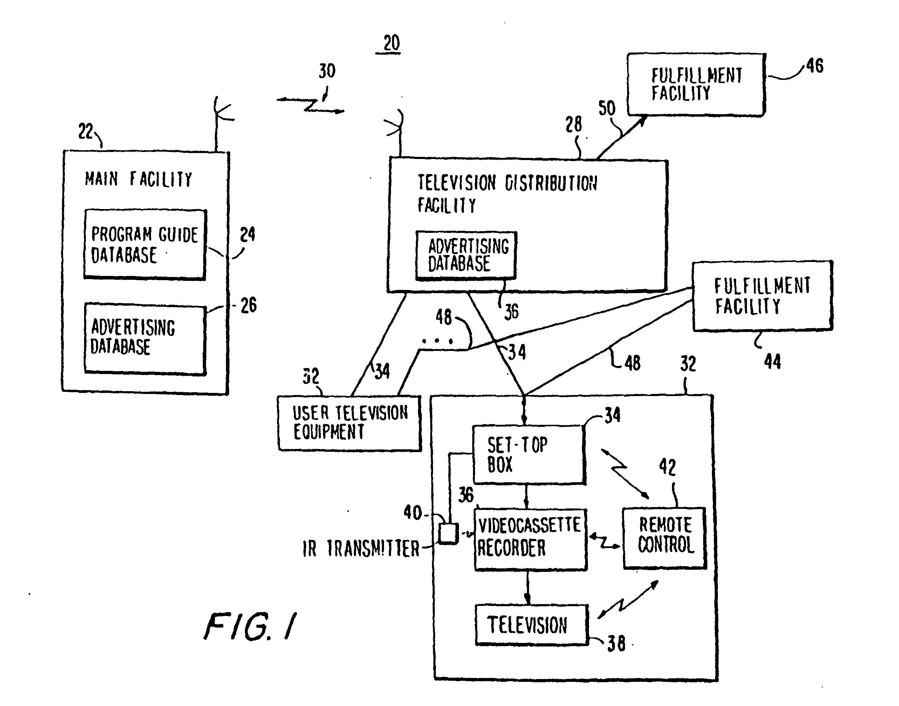

An illustrative interactive television program guide system 20 is shown in FIG. 1. Main facility 22 contains a program guide database 24 for storing program guide information such as television program guide listings data, pay-per-view ordering information, television program promotional information, etc. Main facility 22 also contains an advertising database 26 for storing advertising information. Information from databases 24 and 26 may be transmitted to multiple television distribution facilities such as television distribution facility 28 via communications links such as communications link 30. Link 30 may be a satellite link, a telephone network link, a cable or fiber-optic link, a microwave link, a combination of such links, or any other suitable communications path. If it is desired to transmit video signals (e.g., for advertising and promotional videos) over link 30 in addition to data signals, a relatively high bandwidth link such as a satellite link is generally preferable to a relatively low bandwidth link such as a telephone line.

Television distribution facility 28 is a facility for distributing television signals to users, such as a cable system headed, a broadcast distribution facility, or a satellite television distribution facility.

The program guide information transmitted by main facility 22 to television distribution facility 28 includes television program listings data such as program times, channels, titles, descriptions, etc. Transmitted program information also includes pay program data such as pricing information for individual programs and subscription channels, time windows for ordering programs and channels, telephone numbers for placing orders that cannot be impulse ordered, etc.

The advertising information transmitted by main facility 22 to television distribution facility 28 may include text, graphics, and video advertisements for various programs, products, and services. Advertisements may be distributed from main facility 22 to multiple television distribution facilities 28, although only one television distribution facility 28 is shown in FIG. 1 to avoid over-complicating the drawing.

Each television distribution facility 28 distributes advertisements to users at associated user television equipment 32 via communications links 34. If desired, some advertising information may be provided using advertising database 36 in television distribution facility 28.

User television equipment 32 may be any suitable equipment for providing television to the user that contains sufficient processing capabilities to implement an interactive television program guide. Paths 34 may be cable links, fiber-optic links, satellite links, broadcast links, or other suitable link or combination of such links. Any suitable communications scheme may be used to transmit data over paths 34, including in-band transmissions, vertical blanking interval transmissions, out-of-band transmissions, digital transmissions, analog transmissions, cable transmissions, satellite transmissions, over-the-air transmissions, multichannel multipoint distribution services (MMDS) transmissions, etc.

The data distribution technique that is used to distribute data on paths 34 depends on the type of information that is being distributed. For example, text and graphics may be distributed over an out-of-band channel using an out-of-band modulator. Video information may also be distributed in this way, although large quantities of video information may be more efficiently distributed using one or more digital channels on path 56. Such digital channels may also be used for distributing text and graphics.

Each user has a receiver, which is typically a set-top box such as set-top box 34, but which may be other suitable television equipment such as an advanced television receiver into which circuitry similar to set-top-box circuitry has been integrated or a personal computer television (PC/TV). Data such as program guide data may be distributed to set-top boxes 34 periodically. Television distribution facility 28 may also poll set-top boxes 34 periodically for certain information (e.g., pay program account information or information regarding programs that have been purchased and viewed using locally-generated authorization techniques).

Main facility 22 preferably contains a processor to handle information distribution tasks. Each set-top box 34 preferably contains a processor to handle tasks associated with implementing the interactive television program guide. Television distribution facility 28 may contain a processor for handling tasks associated with data distribution.

Each set-top box 34 is typically connected to an optional videocassette recorder 36 so that selected television programs may be recorded. Each videocassette recorder 36 is connected to a television 38. To record a program, the interactive television program guide implemented on set-top box 34 tunes set-top box 34 to a particular channel and sends control signals to videocassette recorder 36 using, e.g., infrared transmitter 40, that direct videocassette recorder 36 to start and stop recording at the appropriate times.

During use of the program guide, television program listings, advertisements, and other information may be displayed on television 38. Each set-top box 34, videocassette recorder 36, and television 38 may be controlled by one or more remote controls 42 or any other suitable user input interface such as a wireless keyboard, mouse, trackball, dedicated set of keys, etc. A typical remote control 42 has cursor keys for positioning a highlight region on the program guide screen and an OK or select button for selecting a highlighted item on the screen. Other typical remote control buttons include buttons such as a record button, channel up and down buttons, volume control buttons, numeric keys, etc.

Communications paths 34 preferably have sufficient bandwidth to allow television distribution facility 28 to distribute television programming, program listings information, advertisements, and other information to user television equipment 32. Multiple television and audio channels (analog, digital, or both analog and digital) may be provided to user television equipment 32 via communications paths 34. If desired, certain data such as program listings data may be distributed by one or more distribution facilities that are separate from television distribution facility 28 using communications paths that are at least partly separate from communications paths 28.

Certain functions, such as pay program purchasing, the purchasing of products or services, and data collection functions, may require that user television equipment 32 transmit data to television distribution facility 28 over communications paths 34. If desired, such data may be transmitted over telephone lines or other separate communications paths. If functions such as these are provided using facilities separate from television distribution facility 28, some of the communications involving user television equipment 32 may be made directly with the separate facilities.

Users of the interactive television program guide may interactively order additional information, products, or services. For example, a user may place an order by selecting an advertisement displayed in the program guide. Such orders may be satisfied by fulfillment facilities 44 and 46. If desired, orders may be transmitted directly to fulfillment facilities such as fulfillment facility 44 via links 48, which may be telephone links, the Internet, or other suitable communications links. Orders may also be transmitted to television distribution facility 28 via links 34, where the billing system of the television distribution facility may be used. After the television distribution facility 28 has processed the user's order, television distribution facility 28 may transmit the order to fulfillment facility 46 via link 50.

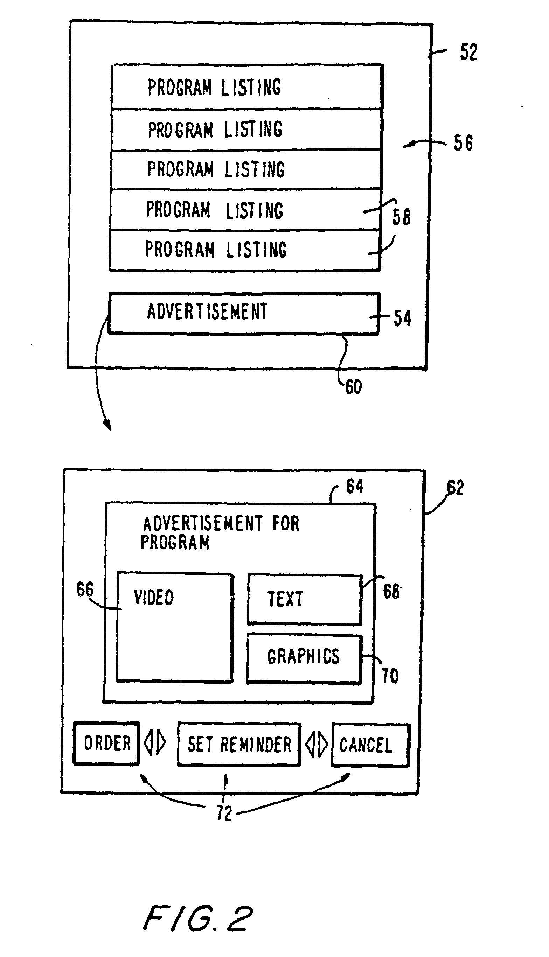

An illustrative program guide screen 52 containing an advertisement 54 is shown as the upper screen of FIG. 2. Screen 52 contains program listings region 56, which includes a number of program listings 58 for various television programs. The program listings 58 in program listings region 56 may be displayed in any of a number of suitable formats such as listings ordered by time or by channel, listings grouped by genre, etc. Advertisement 54 may be selected by the user by positioning highlight 60 on advertisement 54 using remote control cursor keys and pressing an OK or select button.

Advertisement 54 may be, for example, an advertisement for an upcoming television program. As shown in the lower screen of FIG. 2, selecting advertisement 54 may direct the program guide to display a screen 62 that contains a more detailed advertisement 64 for that program. Advertisement 64 and other advertisements in the program guide may contain video 66, text 68, and graphics 70. Screen 62 may contain options 72 that allow the user to order the advertised program (if the program is a pay-per-view program), set a reminder for the program, or cancel the advertisement.

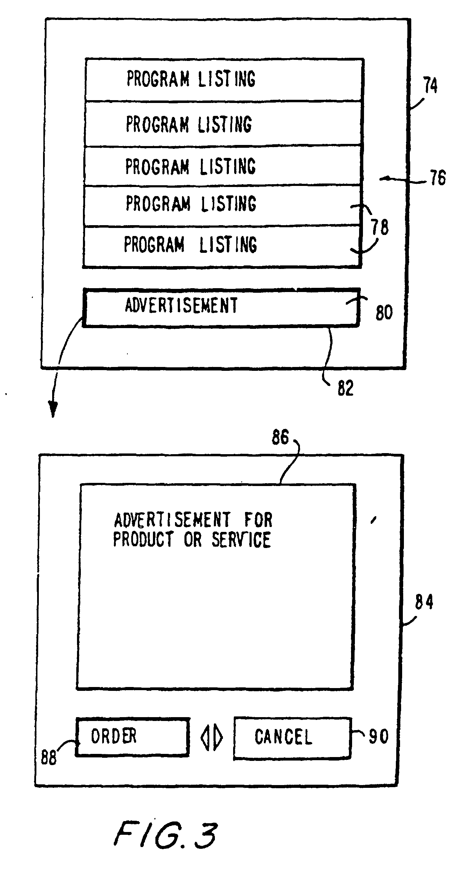

Advertisements may also be used to promote products and services. As shown in FIG. 3, program guide screen 74 contains a program listings region 76 that contains a number of program listings 78. Screen 74 also contains an advertisement 80 for a product or service. The user may select advertisement 80 by positioning highlight 82 on advertisement 80 using remote control cursor keys and pressing a select or OK button.

Selecting advertisement 80 directs the program guide to display program guide screen 84, which is shown as the lower screen in FIG. 3. Screen 84 typically contains more detailed advertising information 86 on the product or service being promoted. Screen 84 also contains an order option 88 for ordering the product or service (using, e.g., fulfillment facility 44 or 46) and a cancel option 90 for cancelling the screen 84.

Program guide screens 52 and 62 of FIG. 2 and program guide screens 74 and 84 are illustrative only. Any other suitable interactive television program guide screen may be provided in the program guide if desired. Such program guide screens may or may not include advertisements and program listings.

In order to measure the effectiveness of certain advertisements, system 20 may monitor how advertisements are distributed to user television equipment 32. System 20 may also monitor the location in the program guide where the advertisements are displayed and may monitor how often advertisements are displayed. System 20 may also monitor usage of various program guide screens (even if no advertisements are present). If desired, information on the user's viewing activities may be monitored. The program guide may also collect information on which non-program-guide applications the user runs. Any other suitable type of information on the user's activities or use of the program guide may be monitored if desired. The data that is collected on the user's activities may be analyzed at any suitable data processing facility, such as a data processor located at main facility 22 of FIG. 1, television distribution facility 28 of FIG. 1, or any other suitable facility or facilities.

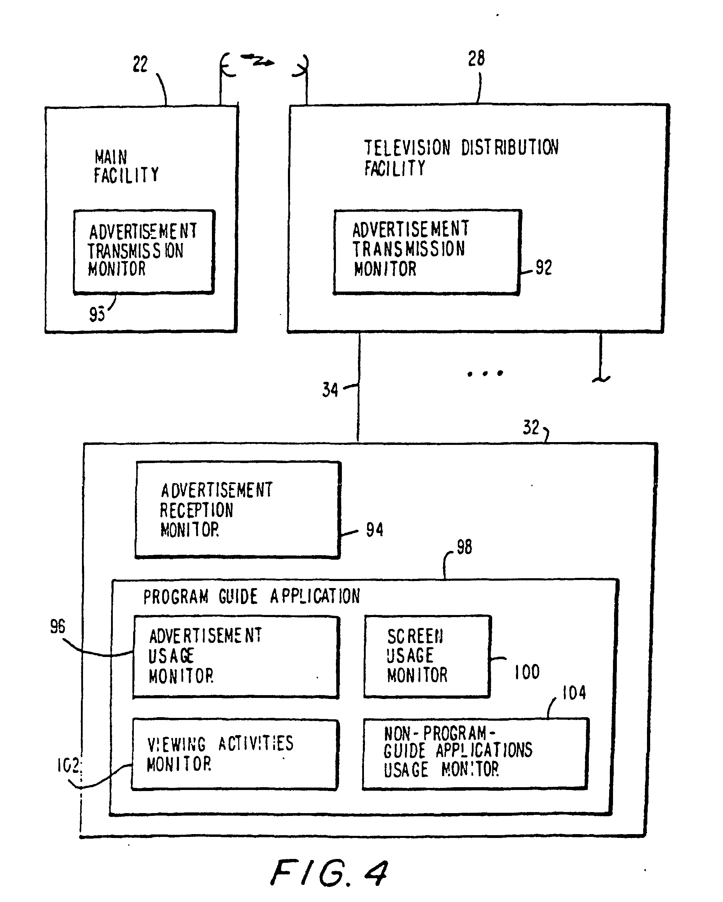

As shown in FIG. 4, television distribution facility 28, main facility 22, or both may be provided with advertisement transmission monitors 92 and 93 to monitor each advertisement as it is transmitted from main facility 22 to television distribution facility 28 and as it is transmitted from television distribution facility 28 to user television equipment 32. This arrangement is advantageous in situations in which, for example, main facility 22 or television distribution facility 28 performs tasks associated with analyzing the collected data.

Advertisement distribution may also be monitored using an advertisement reception monitor 94 in the user television equipment 32 of each user. Advertisement reception monitor 94 keeps track of which advertisements are received by user television equipment 32.

Another way in which advertisement usage may be monitored is with advertisement usage monitor 96. Advertisement usage monitor 96 collects information on which advertisements are displayed by the program guide. Advertisement usage monitor 96 is shown as being part of program guide application 98. Other suitable usage monitors that may be provided as part of program guide application 98 include screen usage monitor 100 (for collecting information on which screens are visited by the user), viewing activities monitor 102 (for collecting information on which programs the user watches), and non-program-guide applications usage monitor 104 (for collecting information on which applications are used by the user other than the program guide.

If desired, one or more of monitors 96, 100, 102, and 104 may be implemented on user television equipment 32 fully or partially separate from program guide application 98. Advertisement reception monitor may also be fully or partially incorporated into program guide application 98 if desired. The arrangement of FIG. 4 is illustrative only. Any other suitable monitor arrangement may be used if desired. For example, it may not generally be necessary to provide three advertisement monitors (i.e., monitors 92, 94, and 96), only one or two such monitors may be satisfactory.

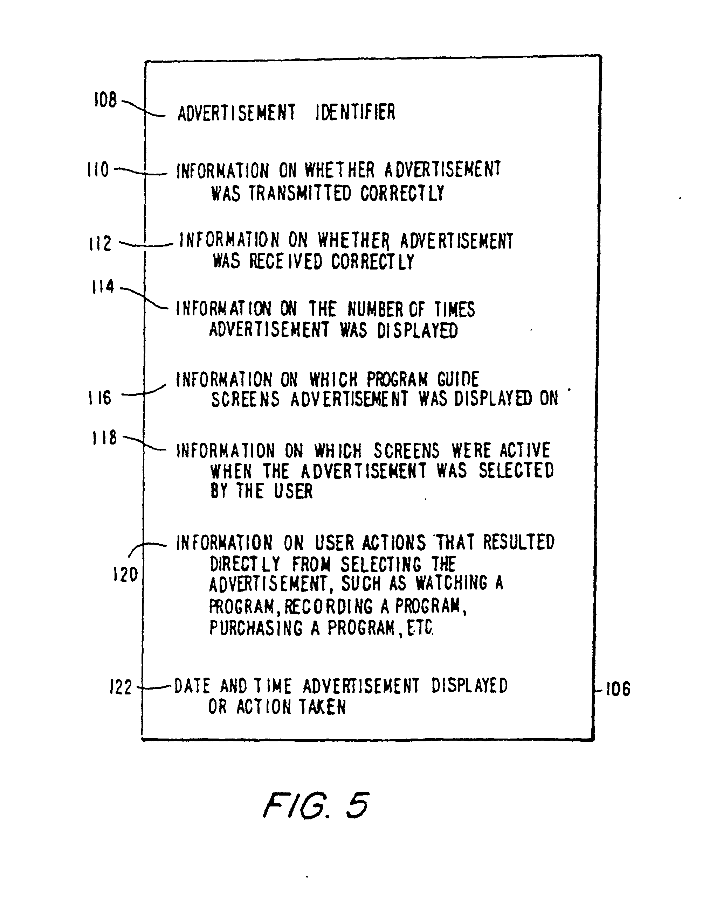

When monitoring usage of an advertisement, system 20 may collect a number of different items of data. An illustrative advertisement usage data structure 106 that may be used by system 20 in collecting advertisement usage data is shown in FIG. 5. Data structure 106 preferably contains a unique advertisement identifier 108 for identifying the advertisement to which the data in data structure 106 relates.

If transmission monitors such as advertisement transmission monitors 92 and 93 of FIG. 4 are used, data structure 106 may contain information 110 on whether the advertisement was transmitted correctly from main facility 22 (FIGS. 1 and 4) to television distribution facility 28 (FIGS. 1 and 4) and whether the advertisement was transmitted correctly from television distribution facility 28 (FIGS. 1 and 4) to user television equipment 32 (FIGS. 1 and 4).

If a reception monitor such as advertisement reception monitor 94 of FIG. 4 is used, data structure 106 may contain information 112 on whether the advertisement that was transmitted from television distribution facility 28 (FIGS. 1 and 2) to user television equipment 32 (FIGS. 1 and 2) was received correctly by user television equipment 32.

If an advertisement usage monitor such as advertisement usage monitor 96 of FIG. 4 is used, data structure 106 may contain various data on when and where in the program guide the advertisement was displayed. For example, data structure 106 may contain information 114 on the number of times that the advertisement was displayed. Data structure 106 may also contain information 116 on which program guide screens the advertisement was displayed on. Data structure 106 may contain information 118 on which program guide screens was active each time the advertisement was selected by the user. Another type of information that data structure 106 may be provided with is information 120 on the user actions that resulted directly from the user's selection of the advertisement. Information 120 may also include information on actions taken automatically by the program guide. The actions included in information 120 may include watching a program, recording a program, purchasing a program, etc. If desired, the date and time the advertisement or action was taken in the program guide may be monitored and appropriate information 122 may be stored in data structure 106.

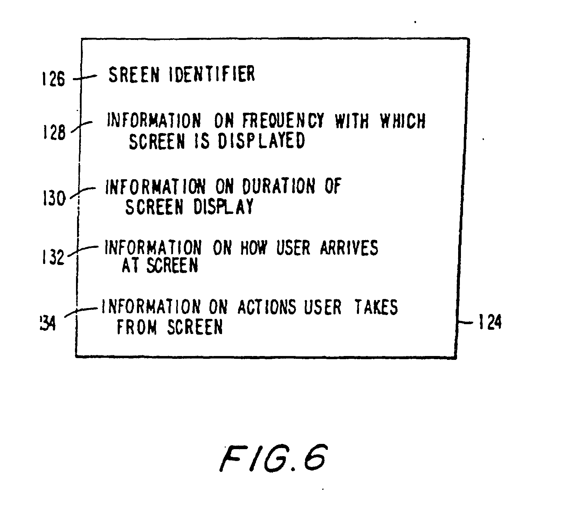

If system 20 contains a screen usage monitor such as screen usage monitor 100 of FIG. 4, the system may maintain data structures such as screen usage data structure 124 of FIG. 6. Data structure 124 may include information 126 that uniquely identifies the interactive television program guide screen viewed by the user. Data structure 124 may also contain information 128 on the frequency with which the program guide screen is displayed. Information 130 may be provided in data structure 124 on the duration for which the screen is displayed. If desired, information 132 may be provided in data structure 124 on how the user arrived at the screen (e.g., which menu options were selected to allow the user to navigate through the program guide to the screen). Data structure 124 may also include information 134 on which actions the user takes from the screen.

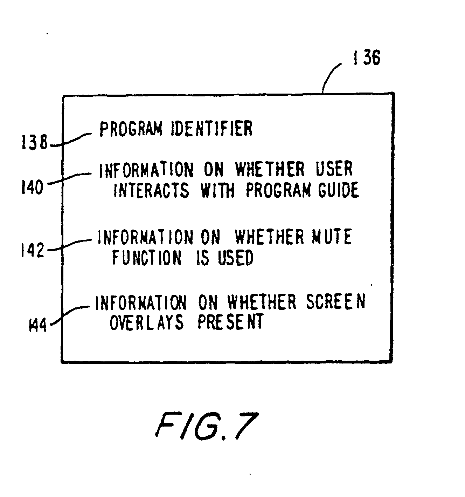

If system 20 contains a viewing activities monitor such as viewing activities monitor 102 of FIG. 4, the system may maintain data structures such as viewing activities data structure 136 of FIG. 7 to keep track of the programs that each viewer watches. Data structure 136 preferably contains a program identifier 138 for uniquely identifying the program watched by the user. Data structure 136 may also contain information 140 on whether the user interacts with the program guide while the program is displayed. If the user is not interacting with the program guide, then it is possible that the user has left the room and is no longer watching the program. The time elapsed from the last user interaction may be used by the program guide in evaluating ratings for various programs. Another type of information that may be included in data structure 136 relates to information on whether the user has blocked the audio or video of the program that is being displayed. This also indicates that the user is not actively watching the program. Information on blocked audio or video may include information 142 on whether the user has invoked an audio mute function or information 144 on whether any screen overlays are present while the program is displayed.

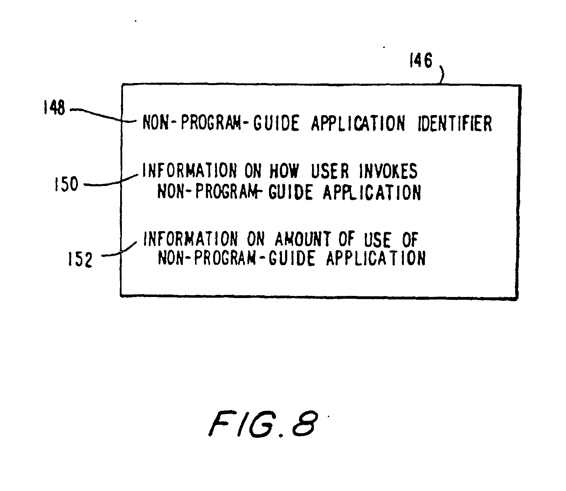

If system 20 contains a non-program-guide monitor such as non-program-guide monitor 104 of FIG. 4, the system may maintain data structures such as non-program-guide application data structure 146 of FIG. 8 to keep track of which non-program-guide applications are used. Examples of such non-program-guide applications include set-top based video games, home shopping applications, web browser applications, home banking applications, etc. Data structure 146 preferably contains a non-program-guide application identifier 148 that uniquely identifies which non-program-guide application is being used. Data structure 146 may also include information 150 on how the user invokes the application (e.g., whether or not the user invokes the non-program-guide application from the program guide, which program guide screen the user invokes the application from, etc.) Information 152 may also be included in data structure 146 on the amount of use of the non-program-guide application.

Data structures such as data structure 106, data structure 124, data structure 136, and data structure 146 may be collected in various locations within system 20 and may be distributed and maintained in various locations within system 20. For example, such data structures may be collected in whole or in part in user television equipment 32 (FIGS. 1 and 2) and passed to television distribution facility 28 or other suitable data processing facility for analysis. Another suitable location for data processing is main facility 22 or a separate data processing facility. After the collected data is processed, the results may be used at any suitable locations within system 20, such as at main facility 22, television distribution facility 28, or user television equipment 32.

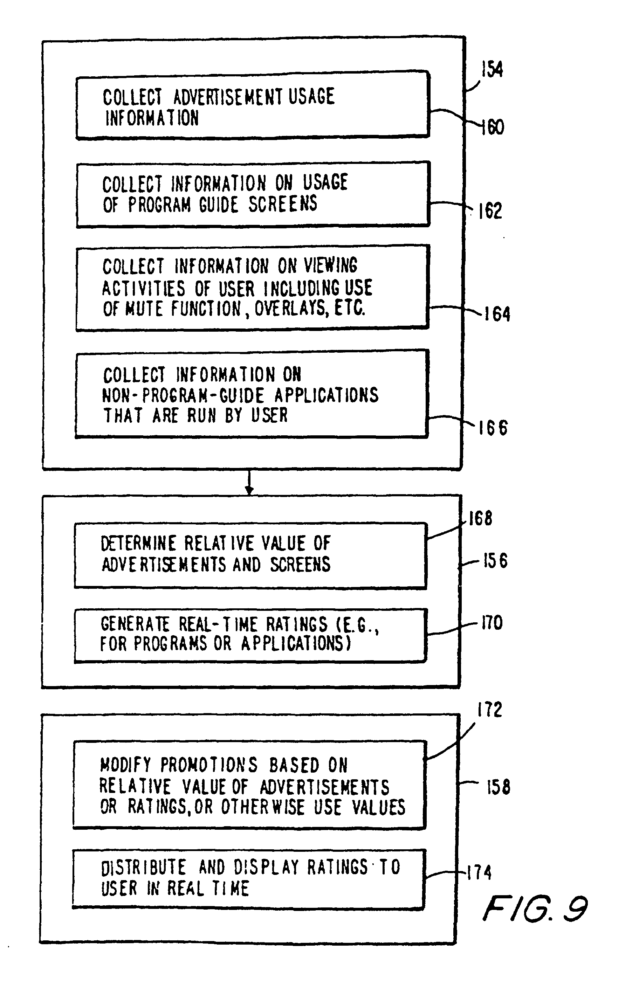

Steps involved in monitoring various activities with system 20 are shown in FIG. 9. Steps 154 involve information collection. Steps 156 involve data analysis. Steps 158 involve using the results of the data analysis. Although shown in FIG. 9 as steps that may be performed successively, steps 154, 156, and 158 and their substeps may be performed (in whole or in part) in any suitable order or concurrently if desired. Moreover, these steps are only illustrative, any other information collection, data analysis, and data analysis usage steps may be performed by system 20 if desired.

At step 160, information on advertisement usage is collected (e.g., by one or more advertisement monitors such as advertisement monitors 92, 94, and 96 of FIG. 4). At step 162, information on the user's use of various program guide screens is collected. At step 164, information is collected on the viewing activities of the user (e.g., which programs the user watches and what audio and video blocking functions are used). At step 166, information is collected on the non-program-guide applications run by the user.

At step 168, the collected information is used to determine the relative value of various advertisements and various program guide screens. For example, if it is determined that users very frequently view a particular program guide screen and often select advertisements that appear on that particular screen, it can be concluded that that particular program guide screen is a valuable location to place advertisements within the program guide. If it is determined that a certain advertisement is selected frequently regardless of its location within the program guide, it may be concluded that that type of advertisement is effective.

At step 170, the information collected in step 154 is used to generate real-time ratings such as real-time ratings of how popular (or unpopular) certain television programs are or real-time ratings indicating which non-program-guide applications such as video games are being used most (or least) often.

At step 172, information on the relative value of different advertising locations determined at step 168 may be used in modifying various advertising promotions. Information on the relative values of advertising locations may also be used to generate advertising rates for sales personnel to use in selling advertisements. If desired, information on the value of different program guide locations may be used to automatically charge advertisers fees that are proportional in some respect to the value received when advertisements are placed in various locations. Information on the value of advertising locations within the guide may also be used in redesigning guides to maximize advertising effectiveness. Information on a particular advertisement's effectiveness may be used to design other advertisements of the same type.

At step 174, the real-time ratings information generated at step 170 may be distributed to user television equipment 32 and displayed (e.g., on each user's television 38). Real-time ratings information may include information on which programs are being watched or which video games or other applications are being used.

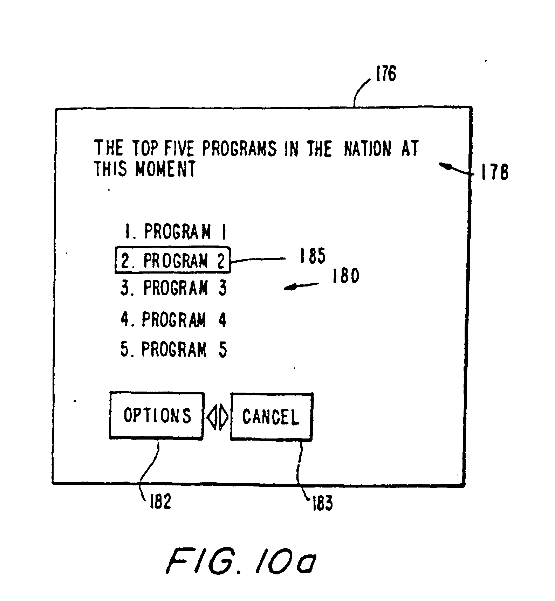

Real-time ratings may be provided to users at user television equipment 32 for display on television 38 in real time. An illustrative real-time ratings program guide screen 176 is shown in FIG. 10a. The user may direct the program guide to display screen 176 by pressing a suitable remote control button or selecting a suitable menu option. The program guide may also provide real-time ratings information to the user automatically. Screen 176 contains title 178, real-time ratings information 180, options button 182, and cancel button 183 (for cancelling screen 176). In the example of FIG. 10a, screen 176 is shown as displaying information related to the current top five programs in the nation. By selecting options button 182, the user may be provided with suitable opportunities to direct the program guide to display other types of real-time ratings information.

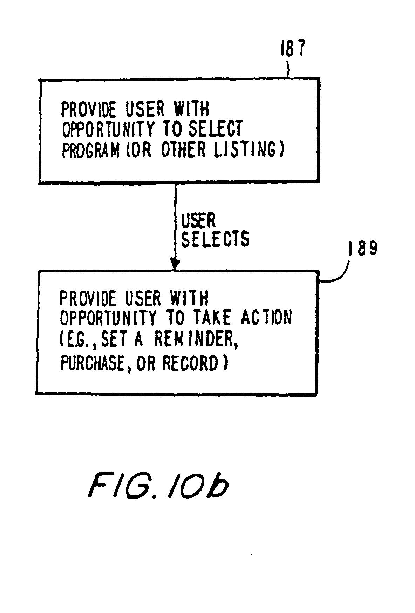

If desired, the program guide may provide a movable highlight region such as highlight region 185. The user may use highlight region to select a program of interest from the programs listed on real-time ratings screen 176. The program guide may provide the user with an opportunity to take various actions with respect to the selected program. For example, the program guide may allow the user to set a reminder for the selected program. The program guide may also allow the user to purchase the selected program if the selected program is a pay-per-view program. If desired, the program guide may provide the user with an opportunity to set up a recording of the selected program. Steps involved in this process are shown in FIG. 10b. At step 187 the program guide provides the user with an opportunity to select a desired listing (e.g., a program). At step 189, after the user has selected a listing, the program guide provides the user with an opportunity to take an action in the program guide, e.g., to set a reminder for a program, to purchase a pay-per-view program, or to record a program.

The real-time ratings screen may be presented as a full screen or as a partial screen overlay (e.g., over a television program that the user is watching).

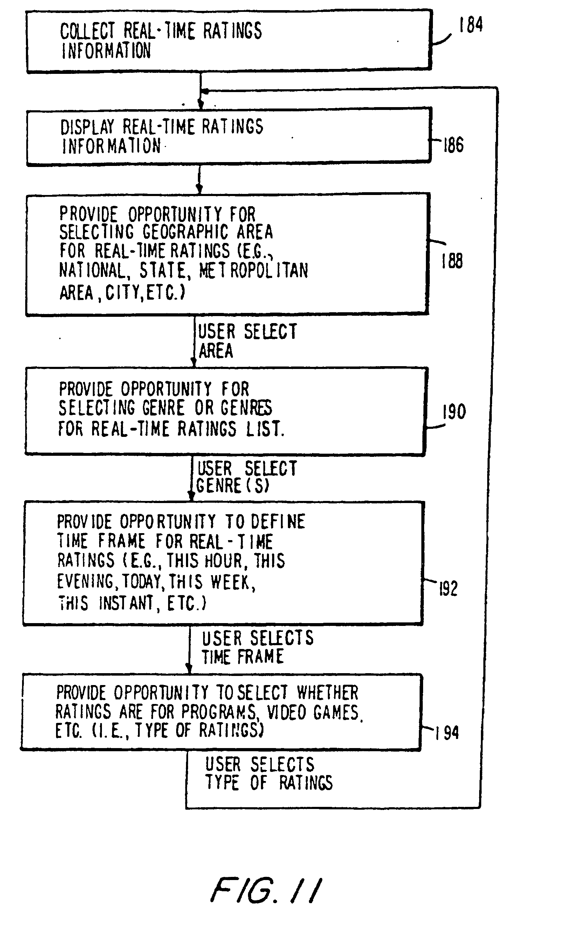

Steps involved in handling real-time ratings information are shown in FIG. 11. At step 184, system 20 collects real-time ratings information (e.g., by monitoring the viewing activities of the user with viewing activities monitor 102). Collecting the ratings information typically involves the use of a data processor, which may be located at main facility 22, television distribution facility 28, or other suitable data processing facility. At step 186, the real-time ratings information may be displayed (by the program guide or other suitable application or passively on a special television channel) on user television equipment 32 using a screen such as real-time ratings screen 176 of FIG. 10a or any other suitable display format.

When the user selects options button 182, the user is provided with opportunities to select the type of real-time ratings information that the user desires to view. For example, at step 188, the user is provided with an opportunity to select the geographic area for which real-time ratings information is desired. The user may direct the program guide to display real-time ratings information for the nation, for a state, for a metropolitan area, a city or town, or any other suitable geographic area. At step 190, an opportunity is provided for the user to select a programming genre or genres of interest (e.g., sports, movies, comedy, etc.). If the user selects the genre sports, real-time ratings for sports-related programs may be displayed on screen 176 of FIG. 10a. If the user selects the genres movies and comedy, the top five comedy movies may be displayed on real-time ratings screen 176 of FIG. 10a. At step 192, an opportunity is provided for the user to define a suitable time frame for the real-time ratings. For example, the user may opt to have real-time ratings displayed for programs during the last hour, programs for the current evening, programs for the current week, or programs being aired at that instant, etc. These time frames are illustrative and any other suitable time frames or combination of time frames may be used if desired. At step 194, the user is provided with an opportunity to select the type of ratings that the user wishes to view. For example, the user may opt to have real-time ratings information displayed for television programs (e.g., the top five movies being viewed on television this evening in the nation). The user may also opt to have real-time ratings information displayed for set-top applications such as video games (e.g., the top five video games being played in the metropolitan area at this instant). These are only illustrative examples of the types of ratings information that may be displayed. Any other suitable ratings information may be displayed if desired.

After the user has selected from the options presented at steps 188, 190, 192, and 194, real-time ratings information is displayed again at step 186. Although the opportunities provided in steps 188, 190, 192, and 194 are preferably opportunities that are provided by the interactive program guide implemented on user television equipment 32, these steps may be provided using any other suitable application implemented on user television equipment 32 or system 20 if desired. Moreover, steps 188, 190, 192, and 194 are merely illustrative examples of the type of configuration options that may be provided to the user. Any other suitable configuration options for the real-time ratings feature may be provided if desired.

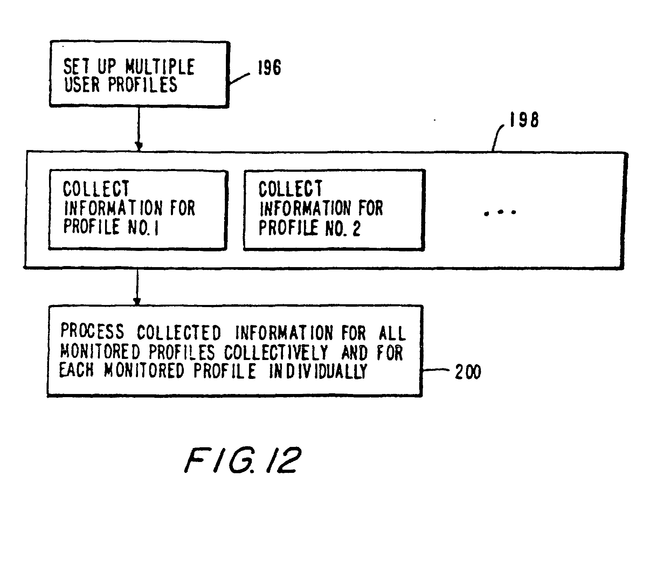

The program guide may support multiple user profiles. For example, each user may set up a profile with a different set of favorite channels. The program guide may ascertain which users are watching a given program by determining which profiles are currently active. Steps involved in monitoring the viewing activities of users in a system with multiple user profiles are shown in FIG. 12. At step 196, the program guide allows the users to set up multiple user profiles. At step 198, the program guide collects information for each of the active profiles. The information collection processes that are used during step 198 may be run concurrently. At step 200, the collected information for the monitored profiles is processed. If multiple profiles were active, the system can use this information to determine the probable number of viewers for a television program. For example, if three profiles were active during a given program, the system may conclude that there were at least three viewers for the program. The system can also process the collected information for each monitored profile individually to provide a more detailed picture of the viewership of the program.

If necessary to reduce the amount of data collected in the system, information may be collected from a subset of users. Information may also be collected from the user television equipment 32 of substantially all of the users in system 20 if it is desired to provide the most accurate usage data possible. Data collected by each user's user television equipment 32 may be uploaded to a central data processing location periodically. For example, data uploading may be performed over a cable return path such as link 34 or a telephone modem line, or other suitable communications path. Data collection may be based on a polling cycle in which each user's user television equipment is periodically polled for the data to be collected. Data may also be transmitted from user television equipment 32 unsolicited at regular intervals. If desired, information confirming the successful transmission of the data being collected may be collected from each user's user television equipment 32 at regular intervals.

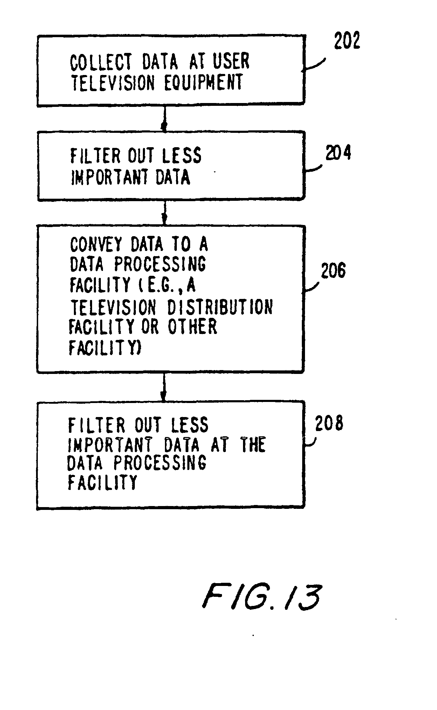

The amount of data handled by the system may be reduced by filtering out less important data at suitable stages during the data collection and data analysis processes. Steps involved in data filtering are shown in FIG. 13. At step 202, data of interest is collected at user television equipment 32. At step 204, less important data is filtered from the data collected at step 202. Step 204 may be performed at user television equipment 32 prior to data transmission. At step 206, the data is conveyed to a data processing facility, which may be for example, one of television distribution facilities 28, main facility 22, or other suitable facility. At step 208, additional data is filtered out of the collected data at the data processing facility.

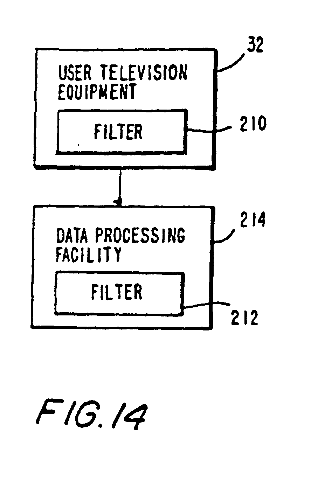

Filtering may be performed at user television equipment 32 (as in step 204) using a filter such as filter 210 in user television equipment 32 of FIG. 14. Filtering may also be performed using a filter 212 at a data processing facility 214 as shown in FIG. 14 (as in step 208). If desired, filtering may be performed at any other suitable location, or at a combination of such locations.

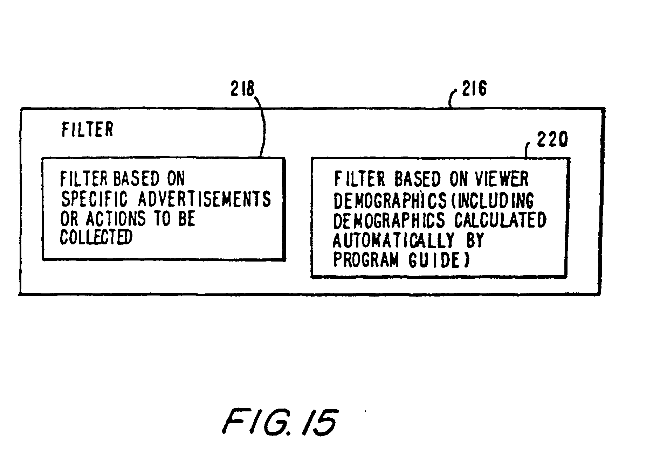

As shown in FIG. 15, a suitable data collection filter 216 may involve the use of a filter 218 that is based on specific advertisements or actions to be collected. This arrangement allows information for only a particular advertisement or set of advertisements to be collected by the system. It also allows information for only a particular action (e.g., the purchasing of a product or ordering of a pay-per-view program) to be collected by the system. Data collection filter 216 may in addition or alternatively be based on a filter 220 that is based on user demographic information. This arrangement allows information to be collected for only certain demographic attributes, such as users with a certain income level, etc. The demographic attributes on which the operation of filter 220 is based may be automatically calculated by the program guide. A program guide with the capacity for handling advertisements based on automatic demographics information is described in Knee et al. International patent application WO99/60789.

The foregoing is merely illustrative of the principles of this invention and various modifications can be made by those skilled in the art without departing from the scope of the invention.

## Claims

1. A system in which an interactive television program guide is implemented on user television equipment, comprising:
means for providing an opportunity for a user to use non-program guide applications on the user television equipment; and
means for collecting information with the interactive television program guide on which non-program guide applications are used.

2. The system defined in claim 1 wherein the means for collecting information on the usage of the non-program guide applications further comprises means for collecting information on the amount that non-program-guide applications are used on the user television equipment.

3. The system defined in claim 1 wherein the means for collecting information on the usage of the non-program guide application further comprises means for collecting non-program guide application identifier information which identifies which applications are used.

4. The system defined in claim 1 further comprising means for collecting information on how users invoke non-program-guide applications on the user television equipment.

5. The system defined in claim 1 wherein the information that is collected on the usage of non-program guide applications is transmitted from the user television equipment to a data processing facility.

6. The system defined in claim 1 further comprising:
means for collecting real-time ratings information.

7. The system defined in claim 1 wherein the non-program guide application is a video game application or a home shopping application or a web browser application or a home banking application.

8. A method for using a system in which an interactive television program guide is implemented on user television equipment, comprising steps of:
providing an opportunity for a user to use non-program-guide applications on the user television equipment; and
collecting information with the interactive television program guide on which non-program guide applications are used.

9. The method defined in claim 8 wherein the collecting information on the usage of the non-program guide applications further comprises collecting information on the amount that non-program-guide applications are used on the user television equipment.

10. The method defined in claim 8 wherein the collecting information on the usage of the non-program guide application further comprises collecting non-program guide application identifier information which identifies which applications are used.

11. The method defined in claim 8 further comprising collecting information on how users invoke non-program-guide applications on the user television equipment.

12. The method defined in claim 8 wherein the information that is collected on the usage of non-program guide applications is transmitted from the user television equipment to a data processing facility.

13. The method defined in claim 8 further comprising:
collecting real-time ratings information.

14. The method defined in claim 8 wherein the non-program guide application is a video game application or a home shopping application or a web browser application or a home banking application.

## Patentansprüche

1. System, bei welchem auf einer Benutzer-Fernseheinrichtung ein interaktiver Programmführer implementiert wird, mit:
einer Einrichtung, welche einem Benutzen eine Möglichkeit bietet, Nicht-Programmführer-Anwendungen auf der Benutzer-Fernseheinrichtung zu benutzen, und
eine Einrichtung, welche mit Hilfe des interaktiven Fernsehprogrammführers Informationen darüber sammelt, welche Nicht-Programmführer-Anwendungen benutzt werden.

2. System nach Anspruch 1, bei welchem die Einrichtung zum Sammeln von Informationen über die Benutzung von Nicht-Programmführer-Anwendungen weiterhin eine Einrichtung zum sammeIn von Informationen über den Umfang, in welchem Nicht-Programmführer-Anwendungen auf der Fernseheinrichtung des Benutzers verwendet werden, umfasst.

3. System nach Anspruch 1, bei welchem die Einrichtung zum Sammeln von Informationen über die Nicht-Programmführer-Anwendung weiterhin eine Einrichtung zum Sammeln von Nicht-Programmführer-Anwendung-Identifizierinformationen, die identifiziert, welche Anwendungen benutzt werden, umfasst.

4. System nach Anspruch 1 weiterhin mit einer Einrichtung zum Sammeln von Informationen darüber, wie Benutzer Nicht-Programmführer-Anwendungen auf der Benutzer-Fernseheinrichtung aufrufen.

5. System nach Anspruch 1, bei welchem die über die Verwendung von Nicht-Programmführer-Anwendungen gesammelte Information von der Benutzer-Fernseheinrichtung zu einer Datenverarbeitungseinrichtung Übertragen wird.

6. System nach Anspruch 1 weiterhin mit:
einer Einrichtung zum Sammeln von Realzeit-Rating-Informationen.

7. System nach Anspruch 1, bei welchem die Nicht-Programmführer-Anwendung eine Videospielanwendung oder eine Homeshopping-Anwendung oder eine Webbrowser-Anwendung oder eine Homebanking-Anwendung ist.

8. Verfahren zur Benutzung eines Systems, in welchem ein interaktiver Fernsehprogrammführer auf einer Benutzer-Fernseheinrichtung implementiert wird, mit den Schritten:
Anbieten einer Möglichkeit für einen Benutzer, Nicht-Programmführer-Anwendungen auf einer Benutzer-Fernseheinrichtung zu benutzen und
Sammeln von Informationen mit dem interaktiven Fernsehprogrammführer darüber, welche Nicht-Programmführer Anwendungen benutzt werden.

9. Verfahren nach Anspruch 8, bei welchem das Sammeln der Informationen über die Benutzung der Nicht-Programmführer-Anwendungen weiterhin das Sammeln von Informationen über den Umfang umfasst, in dem Nicht-Programmführer-Anwendungen auf der Benutzer-Fernseheinrichtung benutzt werden.

10. verfahren nach Anspruch 8, bei welchem das Sammeln von Informationen über die Benutzung der Nicht-Programmführer-Anwendung weiterhin das Sammeln von Nicht-Programmführer-Idenifizierinformationen umfasst, die identifiziert, welche Anwendungen benutzt werden.

11. Verfahren nach Anspruch 8 weiterhin umfassend das Sammeln von Informationen darüber, wie Benutzer Nicht-Programmführer-Anwendungen auf der Benutzer-Fernseheinrichtung aufrufen.

12. Verfahren nach Anspruch 8, bei welchem die über die Benutzung von Nicht-Programmführer-Anwendungen gesammelte Information von der Benutzer-Fernseheinrichtung zu einer Datenverarbeitungseinrichtung übertragen wird.

13. Verfahren nach Anspruch 8 weiterhin umfassend:
das Sammeln von Realzeit-Rating-Informationen.

14. Verfahren nach Anspruch 8, bei welchem die Nicht-Programmführer-Anwendung eine Videospielanwendung oder eine Homeshopping-Anwendung oder eine Webbrowser-Anwendung oder eine Homebanking-Anwendung ist.

## Revendications

1. Système dans lequel un guide interactif de programmes télévisés est mis en oeuvre sur un équipement de télévision personnel, comprenant :
un moyen pour offrir à un utilisateur une possibilité d'utiliser des applications autres que de guide des programmes sur l'équipement de télévision personnel; et
un moyen pour collecter des informations à l'aide du guide interactif de programmes télévisés sur quelles applications autres que de guide des programmes sont utilisées.

2. Système suivant la revendication 1, dans lequel le moyen pour collecter des informations sur l'utilisation des applications autres que de guide des programmes comprend en outre un moyen pour collecter des informations sur - la. quantité d'applications autres que de guide des programmes qui sont utilisées sur l'équipement de télévision personnel.

3. Système suivant la revendication 1, dans lequel le moyen pour collecter des informations sur l'utilisation des applications autres que de guide des programmes comprend en outre un moyen pour collecter des informations d'identification d'applications autres que de guide des programmes qui permet d'identifier les applications utilisées.

4. Système suivant la revendication 1, comprenant en outre un moyen pour collecter des informations sur la manière avec laquelle les utilisateurs appellent des applications autres que de guide des programmes sur leur équipement de télévision personnel.

5. Système suivant la revendication 1, dans lequel les informations qui sont collectées sur l'utilisation d'applications autres que de guide des programmes sont transmises à partir de l'équipement de télévision personnel à une installation de traitement de données.

6. Système suivant la revendication 1, comprenant en outre:
un moyen pour collecter des informations d'évaluation en temps réel.

7. Système suivant la revendication 1, dans lequel l'application autre que de guide des programmes est une application de jeu vidéo, ou une application de téléachat, ou une application de navigation sur internet ou une application de banque à domicile.

8. Procédé pour utiliser un système dans lequel un guide interactif de programmes télévisés est mis en oeuvre sur un équipement de télévision personnel, le procédé comprenant les étapes visant à :
offrir à un utilisateur une possibilité d'utiliser des applications autres que de guide des programmes sur l'équipement de télévision personnel; et
collecter des informations à l'aide du guide interactif de programmes télévisés sur quelles applications autres que de guide des programmes sont utilisées.

9. Procédé suivant la revendication 8, dans lequel la collecte d'informations sur l'utilisation des applications autres que de guide des programmes comprend en outre la collecte d'informations sur la quantité d'applications autres que de guide des programmes qui sont utilisées sur l'équipement de télévision personnel.

10. Procédé suivant la revendication 8, dans lequel la collecte d'informations sur l'utilisation des applications autres que de guide des programmes comprend en outre la collecte d'informations d'identification d'applications autres que de guide des programmes qui permet d'identifier les applications utilisées.

11. Procédé suivant la revendication 8, comprenant en outre la collecte d'informations sur la manière avec laquelle les utilisateurs appellent des applications autres que de guide des programmes sur leur équipement de télévision personnel.

12. Procédé suivant la revendication 8, dans lequel les informations qui sont collectées sur l'utilisation d'applications autres que de guide des programmes sont transmises à partir de l'équipement de télévision personnel à une installation de traitement de données.

13. Procédé suivant la revendication 8, comprenant en outre :
la collecte d'informations d'évaluation en temps réel.

14. Procédé suivant la revendication 8, dans lequel l'application autre que de guide des programmes est une application de jeu vidéo, ou une application de téléachat, ou une application de navigation sur internet ou une application de banque à domicile.
